# EUROPÄISCHE PATENTSCHRIFT

(11) **EP 0 604 815 B1**
(45) Veröffentlichungstag und Bekanntmachung des Hinweises auf die Patenterteilung: **22.09.1999**
(21) Anmeldenummer: 93120060.4
(22) Anmeldetag: 13.12.1993
(51) Int. Cl.: C09D 163/00, C09D 11/10, C08G 59/18

(54) **Thermoplastische/wärmehärtende Beschichtungen oder Tinten für Glass, Keramik und andere harte Oberflächen**
Thermoplastic/thermoset coatings or inks for glass, ceramic and other hard surfaces
Encres ou revêtement thermoplastiques/thermodurcissables pour du verre, de la céramique et d'autres surfaces dures

(30) Priorität: 30.12.1992 US 998628
(43) Veröffentlichungstag der Anmeldung: 06.07.1994
(73) Patentinhaber: CERDEC AKTIENGESELLSCHAFT KERAMISCHE FARBEN, D-60327 Frankfurt (DE)
(72) Erfinder: Knell, Timothy A., McMurray, PA 15317 (US); Burkhart III, Gilbert B., Washington, PA 15301 (US)

(56) Entgegenhaltungen:
- EP-A- 0 325 146
- GB-A- 1 576 330
- US-A- 5 100 934
- PATENT ABSTRACTS OF JAPAN vol. 8, no. 134 (C-230)(1571) 21 June 1984 & JP-A-59 045 367 (NITTO DENKI KOGYO K.K.)
- PATENT ABSTRACTS OF JAPAN vol. 8, no. 222 (C-246)(1659) 9 October 1984 & JP-A-59 108 072 (NITTO DENKI KOGYO K.K.)

## Beschreibung

The present invention generally relates to a method for decorating glass, ceramics and other hard surfaces using blends of one or more epoxy resins with a curing agent which, when formulated with normal coating additives, form superior decorative and functional coatings or inks.

### BACKGROUND OF THE INVENTION

Decorative and functional coatings or inks for glass, ceramics and other hard surfaces normally range from a rigid solid to a semisolid at room temperature. Normally the products are heated to a temperature in the range of 48,9-132,2 °C (120-270 °F) to melt or soften them for application by any one of the standard ink or coating application methods. One preferred method is the use of a heated metal screen and a rubber squeegee in a high temperature version of the "silk screen process". Ceramic inks in thermoplastic carriers are commonly applied in this manner. Following application, the coating is subjected to curing. A critical requirement for a thermoplastic/thermosetting screen ink is that it have a sufficiently wide difference between the melting or softening point - which dictates the screen temperature - and the curing temperature to provide adequate working time on the screen. If that difference is too small, the ink may be unstable on the screen and begin to gel or cure prematurely.

Conversely, if the system is formulated to be so latent that very long cure times and high temperatures are required for curing, the system is impractical for high speed production equipment and/or the thermal stability of the pigments and other additives employed becomes a concern.

As employed herein the term "thermoplastic/thermoset" refers to materials which initially melt or soften upon raising the temperature above room temperature and which, upon further raising of the temperature begin to harden or set as a result or curing. By "latency period" is meant the period during which the thermoplastic/thermoset composition can be maintained at a given temperature before becoming hardened or set.

The document EP-A 0 325 146 refers to a powder coating composition based on a reaction product of a blend of epoxy resins with an aromatic compound with two hydroxylgroups, a phenolic curing agent an accelerator, fillers and pigments.

The JP-A 59-108072 discloses a thermosetting bonding sheet which is adhesive at normal temperatures. The material to be coated or impregnated is an inorganic textile cloth, non-woven cloth or a film. The polymer system comprises a melt mixed system of two epoxy resins and a hardener and an accelerator.

The epoxy resin system of the JP-A 59-45367 comprises two resin-hardener systems which are dry-mixed and then used for powder coating.

According to the US-patent 5,100,934 a specific epoxy resin and an amine containing system is used as a heatset intaglio printing ink. None of the above cited documents is directed to a method for decorating glass, ceramic or other hard surface by heat screen printing.

For coating or ink compositions such as those of this invention, the choice of the curing agent(s) employed is important since the latency period must be, for example, several months at room temperature and up to several hours at temperatures of 60-132,2 °C (140 to 270 °F). In the present invention certain specified curing agent(s) are employed.

### Description of the invention

It has been found a method for decorating glass, ceramic or other hard surface comprising
(1) heating a composition to the melting or softening point of the composition,
(2) applying said melted or softened composition through a heated metal screen to a glass, ceramic or other hard surface, removing said metal screen, and
(3) heating the resultant coating on the said surface to the curing temperature of the composition and maintaining at said temperature until curing is complete, characterized in that said composition comprises
   (a) a melt-mixed blend of aromatic epoxy resins selected from the group consisting of bisphenol A epoxy resin, bisphenol F epoxy resin, epoxy cresyl novolac resin and epoxy phenol novolac resin, whereby at least one epoxy resin is liquid and at least one is solid and the said epoxy resins having an epoxide equivalent weight of 150 to 2000 and the blend having a viscosity, determined by Brookfield HBT Viscometer at 93,3 °C (= 200 °F) 5 RPM, in the range of 0,5 to 15 Pa ^{^{.}} s (500 to 15,000 cps),
   (b) a dicyandiamide curing agent for said epoxy blend which provides a latency period of about 30 minutes at a screening temperature of 48,9 to 132 °C (= 120 to 270 °F), the melting or softening point of said composition being in the range of 30 °C to 120 °C.

The present invention makes use of compositions which are thermoplastic/thermoset coatings or inks for glass, ceramics an other hard surfaces. In their broadest form the compositions comprise a blend of one or more bisphenol A, bisphenol F epoxy resins, epoxy cresyl Novalacs, epoxy phenol Novalacs and a dicyandiamide curing agent which provides a relatively long latency period. When formulated with normal coating additives such as rheological modifiers, pigments, fillers, diluents, wetting agents, adhesion promoters, wax, flow control agents, and the like, decorative and functional coatings with excellent adhesion, appearance and durability can be made.

The bisphenol A epoxy resins are themselves well known and are made by condensing epichlorohydrin with bisphenol A (diphenylol propane) according to the following reaction:

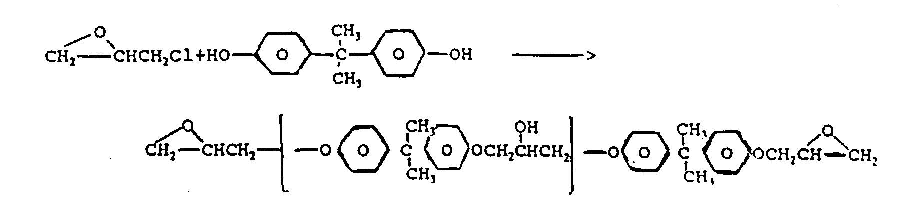

Depending upon the molecular weight the polymer is a viscous liquid or a solid. Examples of the bisphenol A resins are Shell EPON 828, 1001F and 1002F and CIBA Araldite GY6010 and GT6060.

The bisphenol F epoxy resins are also well known and are formed from the reaction of epichlorohydrin with bisphenol F of the formula

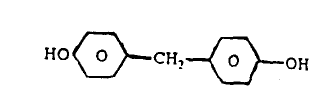

Examples of the bisphenol F resins are Ciba Araldite PY306 and GY281.

The epoxy phenol Novalacs are formed by the reaction of phenolic Novalac with epichlorohydrin. Examples of these epoxy resins are CIBA EPN1138 and EPN1139.

The epoxy cresyl Novalacs are formed from the reaction of ortho-cresyl Novalac or ortho cresyl formaldehyde Novalac with epichlorohydrin. Examples of these epoxy resins are CIBA ECN1235, 1273, 1280 and 1299.

Curing of the epoxy resins takes place through a reaction of the curing agent with the epoxide ring. As indicated above, in the present invention the curing agent is one which provides a relatively long latency period.

In this invention a blend of one or more liquid and one or more solid epoxy resins is employed in order to achieve the desired viscosity and melting point (melting or softening range) of the composition.

The invention offers the possibility to provide a range of compositions having different melting points which can, for example, be employed on the same substrate. For instance, in applications where several coatings or inks of different colors are to be applied to the same substrate, often the first applied coating or ink is selected to have a higher melting (screening) temperature than the second applied coating or ink. The melting (screening) temperatures of subsequently applied coatings or inks may be progressively lower.

In general, the epoxy resins employed have an epoxide equivalent weight (e.e.w.) of 150 to 2000. Small amounts of epoxy resins having higher e.e.w.'s may be added but the use of significant quantities of these may result in formulations with melting ranges and viscosities too high to be of practical value in the known coating procedures, such as screen printing. Those having higher e.e.w.'s are generally used in the known powder coatings.

In general the blends of the epoxy resins are formulated to have a viscosity in the range of 0,5 to 15 Pa^{^{.}}s (500 to 15000 cps) and preferably in the range of 1 to 10 Pa^{^{.}}s (1000 to 10000 cps). Viscosity in this respect is determined by Brookfield HBT Viscometer at 93,3 °C (200 °F) 5RPM.

In general the melting (or softening) point of the compositions is in the range of 30°C to 120°C, the preferred range being 30°C to 80°C.

As commercially available epoxy resins which can be employed, there can be mentioned as examples those mentioned above in connection with each of the types of resins.

In the compositions of the invention the epoxy resin content ranges from 30% to 95% by weight of the composition. The preferred range is from 40% to 85% by weight.

As examples of blends of resins which can be employed, there can be mentioned a blend of about one part by weight of EPON 828 epoxy resin with about two parts by weight of EPON 1001F epoxy resin, and a blend of about one part by weight of EPON 828 with about 1.5 parts by weight of EPON 1001F.

As the curing agent in the present invention use is made of an agent which will provide a composition with a relatively long latency period, i.e., a latency period of about 30 minutes at the screening temperature employed in the coating operation.

To make a one-part epoxy system with the ability to remain molten in the screening temperature range of approximately 120-270°F without curing in the screen, a fairly latent curing agent is necessary. Dicyandiamide and Dicyandiamide-aromatic amine adducts have been found to be very useful. An example is the AMICURE CG series from Pacific Anchor Chemical. It can be used with or without an accelerator to speed the curing process. Examples of accelerated dicyandiamide type curing agents are Shell's EPON Curing Agents P-101 and P-108. The majority of aliphatic primary and secondary amines are too reactive at low temperature to be useful but a variety of proprietary amine derivatives have the required latency for some applications. ANCAMINE 2014AS (Pacific Anchor Chemical) Hardener HT939 (CIBA), and the cyclic amidene products from Thorson are examples.

Anhydrides such as trimellitic anhydride, benzophenone dianhydride and pyromellitic anhydrides can be formulated to make usable compound carboxylic acid terminated polyesters and acrylics have been shown to cure with epoxies. Most tested tend to be too viscous for practical use.

The curing agent employed can be formulated with the epoxy resin blend by simply mixing it with the previously formed blend of epoxy components, or by mixing it with one of the components of the blend and subsequently mixing the resultant mixture with the other epoxy component as components.

The decorative or functional coating or ink compositions of the invention may finally be formed by combining the epoxy blend and curing agent with the other optional components to form the final desired composition. The additional components formulated in the composition will depend upon the desired use of the composition. Additional components include the following:

### A. Rheological modifiers

These are employed to achieve the desired flow properties of the composition. The choice is not limited except that it must, of course, be compatible with the epoxy resin and other components of the composition. Such modifiers can be employed in amounts up to about 10% by weight of the composition. Examples of such rheological modifiers which can be employed are fumed silicas and clays. Some commercially available materials are CAB-O-SIL M-5 and TS-720 supplied by Cabot; the Aerosil series of materials supplied by Degussa; and Bentone series of modified clays supplied by NL Industries.

### B. Pigments

Pigments are employed to achieve the desired color of the composition. In general, any pigment can be employed which is compatible with the other components of the composition and is heat stable at the requisite curing temperatures. The pigments are generally employed in amounts of up to about 50% by weight of the composition. Examples of suitable pigments, are as follows:
Kronos 2220 - Titanium Dioxide,
IRGAZIN DPP Red Bo - Red pigment
Novaperm Red HF35 - Red pigment
PV Fast Yellow HGR - Yellow pigment
Cromophtal Blue A3R - Blue pigment

### C. Fillers

Fillers may be added to adjust the desired viscosity of the composition. Such materials can be employed generally in an amount of up to about 10% by weight of the composition. Examples of such materials are calcium carbonate, silica and alumina.

### D. Diluents

Diluents may also be added to adjust the viscosity of the composition to a desired level. These can be employed in amounts up to about 15% by weight of the composition. These can be reactive or non-reactive diluents. Examples of such materials are as follows:
Benzotlex S-352, 9-88, S-312 (Velsical Chemical)
Viplex 885 (Crawley Chemical)
Araldite RD1, 2-butyl glycidyl ether (Ciba-Geigy Corp.)
Araldite DY-023 - cresyl-glycidyl ether (Ciba-Geigy Corp.)
RJ101 Styrene Allyl Alcohol Resin (Monsanto)
Piccolastic Styrene Resin (Hercules)

### E. Wetting Agents

Wetting agents may be employed to adjust the surface characteristics of the composition. These are employed in amounts of up to about 5% by weight of the composition. Examples of such wetting agents are as follows:
Flurad series of fluorinated surfactants (3M)
Hypermer surfactants (ICI)

### F. Adhesion promoters

These materials can be added to promote the adhesion of the composition to the surface of the material to which the composition is to be applied. They can be employed in amounts of up to about 5% by weight of the composition. Examples of such materials are as follows:
Silane, titanate, zirconate agents and aluminate coupling agents
Union Carbide - A-187
Kenrich
   - Ken React LICA 38 - titanate
   Ken React LZ 38 - zirconate
   Ken React KA 301 aluminate

### G. Waxes

In one important aspect of this invention use can be made of up to about 10% by weight of the composition of a reactive or non-reactive wax. The wax can be added to the composition to control the tackiness of the uncured coating and to give better curing properties. Waxes can also help the gloss and scuff resistance of the coating. The blends of the epoxy resins tend not to have distinct melting points. This is especially the case for blends with the lower average e.e.w.'s. As a result they are often tacky at room temperature after they have been printed. This tackiness can adversely affect the ability to print subsequent colors. The use of fatty alcohols such as cetyl and stearyl, diols, like 1,2- and 1,12-didecanediol, and primary and secondary fatty amides with fairly distinct melting points is helpful. These materials have limited solubility or compatibility in the epoxy resin mixture. When the coating mixture is molten, these waxes are molten and reasonably soluble. They tend to act as viscosity reducers. When the coating cools, for example just after printing, they tend to bloom to the top of the film and harden or crystallize. This imparts a non-tacky surface to the film that facilitates the application of subsequent color coatings. The use of this additive can also significantly affect the sharpness of the subsequent color after curing. This aspect is described in a subsequent example herein. Powdered poly olefin and fluorocarbon waxes (SLIP-AXD) from Daniels Products are very effective.

The compositions of the invention can be formed by mixing the necessary compcnents in the requisite amounts. The order of mixing the materials is not critical and can be chosen as convenience demands. In general, the temperature at which the formulation is made can be from 65,5 °C (150 °F) to a temperature up to 121,1 °C (250 °F). In general the epoxies are melted and all materials except the curing agent(s) are mixed together. The curing agent is added just prior to the final dispersion step to reduce the amount of heat the completed system sees.

The coating or ink compositions of the invention can be applied to glass, ceramic or other hard surface substrates in any manner conventionally conducted for thermoplastic/thernoset coating or ink compositions. This generally involves heating the composition to the melting or softening temperature of the particular composition and applying it to the substrate followed by heating at the required setting or curing temperature for the composition.

In many cases, of course, a plurality of coatings, for example, of different colors, will be serially applied to a single substrate and this is conventional in the art.

### EXAMPLES

The following examples are set forth to illustrate the invention. These are purely illustrative and not exhaustive of the invention. Percentages are by weight.

### EXAMPLE 1

A white coating composition especially suitable for coating glass and ceramics is prepared by combining and mixing at about 93,3 - 115,5 °C (200-240 °F), the following described materials in the requisite amounts.

| Formulation Component | Percent of Formulation |
|---|---|
| EPON 828 - epoxy resin | 19.1 |
| EPON 1001 F - epoxy resin | 35.6 |
| Modaflow - flow control agent | 2.5 |
| Silane A187 - Adhesion promoter | 2.1 |
| Cab-O-Sil TS-720 - rheology modifier | 0.9 |
| Amicure CG-1400 - dicyandiamide curing agent | 5.5 |
| Kenamide S - fatty amide wax-primary stearyl amide | 5.0 |
| Kronos 2220 - titanium dioxide white pigment | 29.1 |

In formulating the composition the epoxy resins are melted and all of the components with the exception of the Amicure CG-1400 are added and mixed therewith. In the final stage the Amicure CG-1400 is added and mixed with the resultant mixture.

### Example 2

A red coating composition especially suitable for coating glass and ceramics is prepared by combining and mixing at about 93,3 °C to about 115,5 °C the following described materials in the requisite amounts.

| Formulation Component | Percent of Formulation |
|---|---|
| EPON 828 - epoxy resin | 31.6 |
| EPON 1001 F - epoxy resin | 47.4 |
| Modaflow - flow control agent | 2.5 |
| Silane A187 - Adhesion promoter | 2.1 |
| Cab-O-Sil TS-720 - rheology modifier | 1.2 |
| Amicure CG-1400 - dicyandiamide curing agent | 8.1 |
| IRGAZIN DPP Red BO - red pigment | 7.1 |

The formulation of the components is in the same manner as in Example 1.

### Example 3

The white coating of Example 1 is applied to a 12-ounce beverage bottle using a rotary screen printing set up. The stainless steel screen was 270 mesh and was electrically heated to about 220°F. The design was a 2" x 3" rectangle. A 180 mesh screen heated to about 200°F was used to apply an intricate pattern of the red coating of Example 2 to the bottle. Some parts of the red image overlapped the white image. The bottle with the images was cured in a forced air oven at 204,4 °C for 20 minutes. The cured print was hard and scratch resistant with good adhesion, gloss, and sharpness of image.

### Example 4

A white coating formulation is prepared which is identical to the composition of Example 1 except for the omission of the Kenamide S. This formulation and the formulation of Example 1 are separately printed on glass substrates to form uniform white films. A red formulation of Example 2 also containing no Kenamide S is printed in a pattern over the separate white films and cured.

Both of the red patterns over the white films are found to have sharp images before curing. After curing at 400°F for 20 minutes, the red image over the white coating formed from the formulation of Example 1 retains its sharpness with little or no distortion. The red image over the white coating formed from the composition containing no Kenamide S shows significant sagging and distortion of the red image. Fine details are broadened as the red pattern tends to bleed or flow out.

## Patentansprüche

1. Verfahren zum Dekorieren von Glas, Keramik oder anderen harten Oberflächen, umfassend
(1) das Erhitzen einer Zusammensetzung auf ihren Schmelz- oder Erweichungspunkt,
(2) Aufbringen der genannten geschmolzenen oder erweichten Zusammensetzung durch ein erhitztes Metallsieb auf eine Glas-, Keramik- oder andere harte Oberfläche, Entfernen des genannten Metallsiebs, und
(3) Erhitzen der resultierenden Beschichtung auf der genannten Oberfläche auf die Härtetemperatur der Zusammensetzung und Erhalten der genannten Temperatur, bis die Härtung abgeschlossen ist, dadurch gekennzeichnet, daß die genannte Zusammensetzung folgendes umfaßt:
(a) ein Schmelzengemisch von aromatischen Epoxidharzen, ausgewählt aus der Gruppe bestehend aus Bisphenol-A-Epoxidharz, Bisphenol-F-Epoxidharz, Epoxid-Cresyl-Novolak-Harz und Epoxid-Phenol-Novolak-Harz, wobei wenigstens ein Epoxidharz flüssig und wenigstens eines fest ist und die genannten Epoxidharze eine Epoxid-Äquivalentmasse von 150 bis 2000 aufweisen und die Mischung eine Viskosität, mit dem Brookfield HBT Viskosimeter bei 93,3°C (= 200°F) und 5 UPM bestimmt, im Bereich von 0,5 bis 15 Pa (500 bis 15.000 cps) hat;
(b) einen Dicyandiamid-Härter für die genannte Epoxidmischung, der eine Latenzzeit von etwa 30 Minuten bei einer Siebtemperatur von 48,9 bis 132°C (= 120 bis 270°F) bereitstellt, wobei der Schmelz- oder Erweichungspunkt der genannten Zusammensetzung im Bereich von 30°C bis 120°C liegt.

2. Verfahren nach Anspruch 1, dadurch gekennzeichnet, daß die genannte Zusammensetzung ferner ein Wachs in einer Menge von bis zu 10 Gew.-% der Zusammensetzung und/oder einen Klebbeschleuniger enthält, ausgewählt aus der Gruppe der Silan-, Titanat-, Zirconat- und Aluminat-Haftmittel.

3. Verfahren nach Anspruch 1 oder 2, dadurch gekennzeichnet, daß die Zusammensetzung ferner wenigstens eine der folgenden Komponenten enthält:
(1) ein Pigment, das bei der Härtetemperatur der Zusammensetzung stabil ist, in einer Menge von bis zu 50 Gew.-% der Zusammensetzung,
(2) einen Füllstoff in einer Menge von bis zu 10 Gew.-% der Zusammensetzung,
(3) einen Verdünner in einer Menge von bis zu 15 Gew.-% der Zusammensetzung,
(4) ein Benetzungsmittel in einer Menge von bis zu etwa 5 Gew.-% der Zusammensetzung und
(5) einen Rheologiemodifizierer in einer Menge von bis zu etwa 10 Gew.-% der Zusammensetzung.

## Claims

1. A method for decorating glass, ceramic or other hard surface comprising
(1) heating a composition to the melting or softening point of the composition,
(2) applying said melted or softened composition through a heated metal screen to a glass, ceramic or other hard surface, removing said metal screen, and
(3) heating the resultant coating on the said surface to the curing temperature of the composition and maintaining at said temperature until curing is complete, characterized in that said composition comprises
(a) a melt-mixed blend of aromatic epoxy resins selected from the group consisting of bisphenol A epoxy resin, bisphenol F epoxy resin, epoxy cresyl novolac resin and epoxy phenol novolac resin, whereby at least one epoxy resin is liquid and at least one is solid and the said epoxy resins having an epoxide equivalent weight of 150 to 2000 and the blend having a viscosity, determined by Brookfield HBT Viscometer at 93,3 °C (= 200 °F) 5 RPM, in the range of 0,5 to 15 Pa ^{^{.}} s (500 to 15,000 cps),
(b) a dicyandiamide curing agent for said epoxy blend which provides a latency period of about 30 minutes at a screening temperature of 48,9 to 132 °C (= 120 to 270 °F),
the melting or softening point of said composition being in the range of 30 °C to 120 °C.

2. A method according to claim 1, characterized in that said composition additionally contains a wax in an amount of up to 10 % by weight of the composition and/or an adhesive promotor selected from the group of silane-, titanate-, zirconate- and aluminate-coupling agents.

3. A method according to claim 1 or 2, characterized in that the composition additionally contains at least one of the following components
(1) a pigment which is stable at the curing temperature of the composition in an amount of up to 50 % by weight of the composition,
(2) a filler in an amount of up to 10 % by weight of the composition,
(3) a diluent in an amount of up to 15 % by weight of the composition,
(4) a wetting agent in an amount up to about 5 % by weight of the composition and
(5) a rheological modifier in an amount up to about 10 % by weight of the composition.

## Revendications

1. Procédé pour décorer du verre, de la céramique ou une autre surface dure dans lequel :
(1) on chauffe une composition au point de fusion ou de ramollissement de la composition,
(2) on applique cette composition fondue ou ramollie à travers un écran de métal chauffé à un verre, une céramique ou une autre surface dure, l'enlèvement de cet écran métallique, et
(3) on chauffe le revêtement résultant sur cette surface à la température de durcissement de la composition et on maintient cette température jusqu'à ce que le durcissement soit complet,
caractérisé en ce que cette composition comprend
(a) un mélange, réalisé à l'état fondu, de résines époxydes aromatiques choisies dans le groupe constitué par la résine époxyde de bisphénol A, la résine époxyde de bisphénol F, la résine époxyde de crésyl novolaque et la résine époxyde de phénol-novolaque, dans lequel au moins une résine époxyde est liquide et au moins une résine est solide et ces résines époxydes ayant un poids équivalent d'époxyde de 150 à 2000 et le mélange ayant une viscosité, déterminée par le viscosimètre Brookfield HBT à 93,3°C à 5 tpm comprise dans un intervalle de 0,5 à 15 Pa.s (500 à 15 000 cp),
(b) un agent durcissant dicyandiamide pour ce mélange époxyde qui fournit une période de latence d'environ 30 minutes à une température de criblage à travers l'écran de 48,9 à 132°C, le point de fusion ou de ramollissement de cette composition étant dans un intervalle de 30°C à 120°C.

2. Procédé selon la revendication 1,
caractérisé en ce que
la composition contient en outre une cire en une quantité allant jusqu'à 10 % en poids de la composition et/ou un agent favorisant l'adhésion choisi dans le groupe constitué par les agents de couplage à base de silane, de titanate, de zirconate et d'aluminate.

3. Procédé selon la revendication 1 ou 2,
caractérisé en ce que
la composition contient en outre au moins l'un des composants suivants :
(1) un pigment qui est stable à la température de durcissement de la composition en une quantité allant jusqu'à 50 % en poids de la composition,
(2) une charge en une quantité allant jusqu'à 10 % en poids de la composition,
(3) un diluant en une quantité allant jusqu'à 15 % en poids de la composition,
(4) un agent mouillant en une quantité allant jusqu'à environ 5 % en poids de la composition et
(5) un modificateur de rhéologie en une quantité allant jusqu'à environ 10 % en poids de la composition en poids.
